# EUROPEAN PATENT APPLICATION

(11) **EP 4 819 082 A1**
(43) Date of publication of application: **07.10.2026**
(21) Application number: 24899714.0
(22) Date of filing: 28.11.2024
(51) Int. Cl.: G07C 5/00, G06F 18/20

(54) **DATA ACQUISITION METHOD, CONTROLLER, AND VEHICLE**

(30) Priority: 04.12.2023 CN 202311656437
(71) Applicant: Yinwang Intelligent Technologies Co., Ltd., Shenzhen, Guangdong 518110 (CN)
(72) Inventor: SHEN, Huiyu, Shenzhen, Guangdong 518129 (CN); CHEN, Huan, Shenzhen, Guangdong 518129 (CN)
(74) Representative: Henselmann, Alexander Gerhard
(86) International application number: PCT/CN2024/135268
(87) International publication number: WO 2025/119074

(57) **Abstract**

This application provides a data obtaining method, a controller, and a vehicle, to obtain operating data of a system on a chip SoC by using a microcontroller unit MCU in the vehicle, so as to implement exception analysis on the SoC. In the method, the MCU and the SoC that are included in the controller of the vehicle are connected through a universal asynchronous receiver/transmitter UART interface. Therefore, the MCU may obtain the operating data of the SoC through the UART interface, and then the MCU may forward the operating data to a first vehicle-mounted component, to implement exception analysis on the SoC.

## Description

This application claims priority to Chinese Patent Application No. 202311656437.6, filed with the China National Intellectual Property Administration on December 4, 2023 and entitled "DATA OBTAINING METHOD, CONTROLLER, AND VEHICLE", which is incorporated herein by reference in its entirety.

### TECHNICAL FIELD

This application relates to the field of computer technologies, and in particular, to a data obtaining method, a controller, and a vehicle.

### BACKGROUND

With rapid development of intelligent driving technologies, more and more vehicles use a system on a chip (system-on-chip, SoC) to control normal running of the vehicles. The SoC is a chip-level system formed by combining a series of function-specific integrated circuits on one chip, and can control a plurality of electronic control units (electronic control units, ECUs) in the vehicle. Generally, after the SoC is powered on, various systems on the SoC are started in sequence, to ensure normal running of the SoC. When a startup exception occurs on the SoC, related data in an SoC startup process is obtained, to quickly locate the exception in the SoC startup process, and further analyze a cause of the startup exception of the SoC.

Currently, in a test phase of the SoC, related personnel may directly export related data in the SoC startup process to a diagnostic device through a hardware interface on the SoC, thereby quickly analyzing the cause of the startup exception of the SoC. However, to ensure that information and functions of the SoC are not leaked, the hardware interface is usually not reserved on mass-produced SoCs, making it impossible to obtain related data in the SoC startup process through the hardware interface. Consequently, when the startup exception occurs on the SoC subsequently, a cause of the exception cannot be effectively identified.

### SUMMARY

This application provides a data obtaining method, a controller, and a vehicle, to obtain operating data of a system on a chip SoC by using a microcontroller unit MCU in the vehicle, so as to implement exception analysis on the SoC.

To achieve the foregoing objectives, this application uses the following technical solutions.

According to a first aspect, a data obtaining method is provided. The method is applied to a microcontroller unit MCU in a controller of a vehicle, the controller further includes a system on a chip SoC, the MCU is connected to the SoC through a universal asynchronous receiver/transmitter UART interface, and the method includes: obtaining operating data of the SoC through the UART interface; and sending the operating data to a first vehicle-mounted component, where the operating data is used to perform exception analysis on the SoC.

In the solution of the first aspect, for the vehicle controller including the MCU and the SoC, a UART hardware channel from the SoC to the MCU is added, so that the MCU can obtain the operating data of the SoC through the UART hardware channel, and the MCU sends the obtained operating data of the SoC to the first vehicle-mounted component, to analyze and process the operating data. In this way, after mass production of the controller including the MCU and the SoC, if a startup exception occurs on the SoC, related personnel may still obtain the operating data of the SoC through a path, to quickly analyze a cause of the startup exception of the SoC.

In a possible implementation, after obtaining the operating data of the SoC through the UART interface, the method further includes: compressing the operating data to obtain compressed operating data; and sending the operating data to the first vehicle-mounted component includes: sending the compressed operating data to the first vehicle-mounted component. In this way, the MCU can store a large amount of operating data of the SoC with less memory space.

In a possible implementation, after obtaining the operating data of the SoC through the UART interface, the method further includes: encrypting the operating data to obtain encrypted operating data; and sending the operating data to the first vehicle-mounted component includes: sending the encrypted operating data to the first vehicle-mounted component. In this way, information security of the operating data of the SoC is ensured, and even if an attacker obtains the operating data of the SoC, the attacker cannot discern content of the operating data.

In a possible implementation, after obtaining the operating data of the SoC through the UART interface, the MCU may compress the operating data, and may encrypt the operating data. A sequence of performing compression and encryption is not limited in this application. For example, the operating data may be first compressed, followed by encrypting the compressed operating data.

In a possible implementation, obtaining the operating data of the SoC through the UART interface includes: controlling the SoC to be in a power-on state; obtaining the operating data of the SoC through the UART interface in a system startup process of the SoC; and caching the operating data. In this way, after controlling the SoC to be powered on, the MCU may start to obtain the operating data in the system startup process of the SoC through the UART interface, and cache the operating data in the memory space of the MCU.

In a possible implementation, sending the operating data to the first vehicle-mounted component includes: sending the operating data to the first vehicle-mounted component upon detection of the startup exception of the SoC. In this way, after obtaining the operating data of the SoC, if the MCU detects that the SoC is not normally started, the MCU may automatically send the operating data to the first vehicle-mounted component, so that related personnel can obtain the operating data to locate the exception of the SoC.

In a possible implementation, sending the operating data to the first vehicle-mounted component includes: sending the operating data to the first vehicle-mounted component in response to a first instruction of a user. In this way, after the MCU obtains the operating data of the SoC, if the MCU detects an enabling instruction of the user, the MCU may send the operating data to the first vehicle-mounted component, so that the user learns of the cause of the startup exception of the SoC.

In a possible implementation, the MCU is connected to the first vehicle-mounted component through a controller area network CAN bus, and sending the operating data to the first vehicle-mounted component includes: segmenting the operating data into a plurality of data slices; generating a CAN packet corresponding to each of the plurality of data slices; and sending, to the first vehicle-mounted component through the CAN bus, the CAN packet corresponding to each data slice. In this way, when the MCU sends the operating data of the SoC through the CAN bus, because the CAN bus has limited bandwidth and all the operating data cannot be sent at one time, the operating data may be segmented and then sent a plurality of times.

In a possible implementation, the first vehicle-mounted component is a vehicle-mounted communication component, and the vehicle-mounted communication component is configured to establish a communication connection with an external device of the vehicle; and the operating data indicates the vehicle-mounted communication component to send the operating data to the external device, and indicates the external device to analyze and process the operating data. In this way, the MCU may forward the operating data of the SoC to a communication-capable component in the vehicle, so that the operating data can be sent to the external device, and related personnel can view the operating data and analyze the cause of the exception.

In a possible implementation, the first vehicle-mounted component is a vehicle-mounted display device; and the operating data indicates the vehicle-mounted display device to analyze and process the operating data and display an analysis result. In this way, the MCU may forward the operating data of the SoC to a component that has display and analysis capabilities in the vehicle, so that related personnel can directly view the cause of the exception by using the component.

According to a second aspect, a data obtaining apparatus is provided. The apparatus is included in an MCU of a controller of a vehicle, and the apparatus has a function of implementing the first aspect or any one of the possible designs of the first aspect. The function may be implemented by hardware, or may be implemented by hardware executing corresponding software. The hardware or the software includes one or more modules or units corresponding to the foregoing function. For example, the data obtaining apparatus may include an obtaining module and a sending module. The obtaining module is configured to obtain operating data of an SoC through a UART interface. The sending module is configured to send the operating data to a first vehicle-mounted component, where the operating data is used to perform exception analysis on the SoC.

According to a third aspect, a microcontroller unit MCU is provided. The MCU is used in a vehicle, and the MCU includes a processor, a memory, and a universal asynchronous receiver/transmitter UART interface. The UART interface is configured to connect to a system on a chip SoC, the memory is configured to store a computer program or instructions, and the processor is configured to run the computer program or the instructions to perform the data obtaining method according to any one of the possible implementations of the first aspect.

According to a fourth aspect, a controller is provided. The controller includes the MCU and the SoC according to the third aspect.

According to a fifth aspect, a vehicle is provided. The vehicle includes the controller according to the fourth aspect.

According to a sixth aspect, a chip system is provided. The chip system includes one or more interface circuits and one or more processors. The interface circuit and the processor are interconnected through a line. The interface circuit is configured to receive a signal, and send the signal to the processor, where the signal includes instructions. The processor is configured to run the instructions, to perform the data obtaining method according to any one of the possible implementations of the first aspect.

It may be understood that for beneficial effects that can be achieved by the apparatus according to the second aspect, the microcontroller unit MCU according to the third aspect, the controller according to the fourth aspect, the vehicle according to the fifth aspect, and the chip system according to the sixth aspect, refer to the beneficial effects in the first aspect and any one of the possible implementations of the first aspect. Details are not described herein again.

### BRIEF DESCRIPTION OF DRAWINGS

FIG. 1 is a diagram of an architecture of a vehicle according to an embodiment of this application;
FIG. 2 is a diagram of a system architecture according to a related technology;
FIG. 3 is a diagram of a system architecture according to a related technology;
FIG. 4 is a schematic flowchart of a data obtaining method according to an embodiment of this application;
FIG. 5 is a diagram of a system architecture according to an embodiment of this application;
FIG. 6 is a time sequence diagram of a data obtaining method according to an embodiment of this application;
FIG. 7 is a flowchart of a data obtaining method according to an embodiment of this application; and
FIG. 8 is a diagram of a structure of a data obtaining apparatus according to an embodiment of this application.

### DESCRIPTION OF EMBODIMENTS

The following describes in detail embodiments of this application with reference to accompanying drawings.

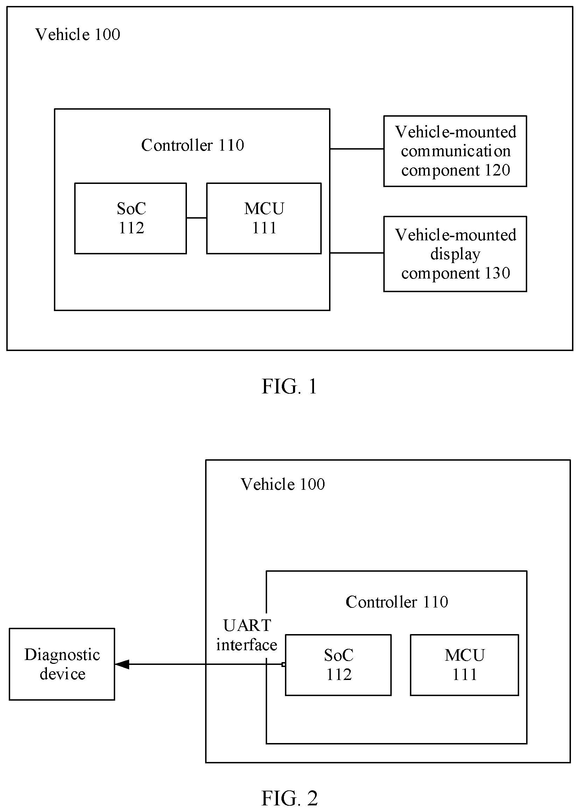

As shown in FIG. 1, an embodiment of this application provides a diagram of an architecture of a vehicle 100. The vehicle 100 may be a conventional vehicle or an autonomous vehicle for transporting a person. The autonomous vehicle may also be referred to as an unmanned vehicle, an intelligent driving vehicle, or the like. The autonomous vehicle may travel in a manual mode, a fully autonomous mode, or a partially autonomous mode. When being configured to travel in the fully autonomous mode or the partially autonomous mode, the autonomous vehicle may travel autonomously in a geographic area with little or no control input from a driver.

Optionally, the vehicle 100 may be a ground-based transportation means, for example, a car, a bus, a motorcycle, a locomotive, or a subway. The vehicle 100 may alternatively be a water-based transportation means, for example, a ship, a hovercraft, or a submarine. The vehicle 100 may alternatively be a flight transportation means, for example, an airplane or a helicopter. A specific type of the vehicle 100 is not limited in this embodiment of this application.

In this embodiment of this application, the vehicle 100 may include at least one controller 110. The controller has a control function, a computing function, and the like.

In some embodiments, the controller 110 may be an electronic control unit (electronic control unit, ECU). Different ECUs may implement different functions, to control normal running of the vehicle. For example, an air conditioning ECU may control a temperature in the vehicle, and an engine ECU may control an air intake amount, a fuel injection amount, an ignition time, and the like of an engine, to control a speed of the vehicle.

The ECUs may be connected to each other through an in-vehicle bus, to implement data communication between the ECUs. The bus may be a controller area network (controller area network, CAN) bus, or may be a wired communication line like an Ethernet bus, a local interconnect network (local interconnect network, LIN) bus, a media oriented system transport (media oriented system transport, MOST) bus, or a FlexRay, or may be a line generated by a wireless communication module like wireless fidelity (wireless fidelity, Wi-Fi), Bluetooth, or ZigBee (ZigBee).

In some embodiments, the vehicle may be divided into a plurality of different domains based on functions. Each domain includes at least one domain controller, and each domain controller is configured to manage a plurality of ECUs connected to one or more CAN buses in the domain.

The controller 110 may alternatively be a domain controller. The domain controller may be a cockpit domain controller (cockpit domain controller, CDC), or referred to as an intelligent cockpit platform, configured to control an intelligent cockpit. The domain controller may alternatively be a vehicle domain controller (vehicle domain controller, VDC), or referred to as a vehicle control platform, configured to control vehicle power. The domain controller may alternatively be a mobile data center (mobile data center, MDC), or referred to as an intelligent driving platform, configured to control intelligent driving. A type of the domain controller is not limited in this embodiment of this application.

The controller 110 may include a microcontroller unit (microcontroller unit, MCU) 111 and an SoC 112. The SoC 112 includes a universal asynchronous receiver/transmitter (universal asynchronous receiver/transmitter, UART) interface. The UART interface is a universal serial data bus, and is used for asynchronous communication. On the SoC, the UART interface may be used for data transmission, debugging indication, and output of debugging information. In this embodiment of this application, the MCU 111 may be connected to the SoC 112 through the UART interface. The MCU 111 is configured to obtain operating data of the SoC 112 through the UART interface.

In this embodiment of this application, a power supply of the SoC 112 is controlled by the MCU 111, and the MCU 111 is responsible for monitoring a working status of the SoC 112 and performing operations such as powering on the SoC 112, powering off the SoC 112, and performing exception recovery. After the MCU 111 powers on the SoC 112, the SoC 112 periodically transmits a data packet of a frame of heartbeat signal to the MCU 111, and the MCU 111 performs timing processing on the heartbeat signal. If the MCU 111 does not receive a next heartbeat signal or a plurality of heartbeat signals within a specified time, the MCU 111 considers that the SoC 112 is abnormal, and restarts the SoC 112.

In this embodiment of this application, after the SoC 112 is powered on, various systems on the SoC 112 are started in sequence. For example, a basic input/output system (basic input/output system, BIOS), a bootloader, and an operating system (operating system, OS) are started in sequence.

In some embodiments, the vehicle may further include a vehicle-mounted communication component 120 having a communication function, for example, a gateway, a telematics communication terminal, or a head unit. The telematics communication terminal is also referred to as a vehicle-mounted telematics box (telematics box, T-box). The vehicle-mounted T-box is a communication-capable box in the vehicle, may provide a remote communication interface for the vehicle 100, and is usually disposed in the vehicle in a concealed manner. The vehicle-mounted T-box is mainly configured to communicate with a background system (for example, a server) or an electronic device, to implement vehicle information display and vehicle control on the electronic device side. The electronic device may be a mobile phone, a tablet computer, a wearable device, or the like. In a possible implementation, the vehicle-mounted T-box may read data of each ECU in the vehicle through the CAN bus, and send the data to the background system (for example, the server) or the electronic device through a network, for user viewing.

In some embodiments, the vehicle may further include a vehicle-mounted display component 130 having a display function, for example, a head unit. The head unit is also referred to as a vehicle-mounted computer or a vehicle-mounted navigation device. The head unit may include a host and a display. The host and the display of the head unit may be disposed together, or may be separately disposed. The head unit is usually mounted inside a central console. The central console is a workbench in front of the driver seat and the front passenger seat in the vehicle 100. The workbench is usually a carrier of apparatuses such as a dashboard, an air conditioner, a speaker panel, a storage box, and an airbag. Optionally, the head unit may be connected to a sensor in the vehicle, and the head unit may control the vehicle based on data from the sensor. The sensor in the vehicle may include but is not limited to a temperature sensor, a speed sensor, and an image sensor.

In some embodiments, the controller 110 may be connected to the vehicle-mounted communication component 120 and the vehicle-mounted display component 130 through a bus, to implement data communication.

In some embodiments, the head unit and the telematics communication terminal may alternatively be ECUs in the vehicle.

It may be understood that a structure of the vehicle is not limited in this embodiment of this application, and the vehicle may include more components or devices. All methods in the following embodiments may be implemented in the vehicle or the controller having the foregoing hardware structure.

Generally, when a startup exception occurs on the SoC, related personnel may obtain related data in an SoC startup process, to quickly locate the exception in the SoC startup process, and further analyze a cause of the startup exception of the SoC.

Currently, in a test phase of the SoC, as shown in FIG. 2, related personnel may directly connect a data cable from a hardware UART interface on the SoC to a diagnostic device, so that related data in the SoC startup process can be exported to the diagnostic device, and the cause of the startup exception of the SoC can be quickly analyzed. However, to ensure that information and functions of the SoC are not leaked, the hardware UART interface is usually not reserved on mass-produced SoCs, making it impossible for related personnel to obtain related data in the SoC startup process by accessing the hardware UART interface. Consequently, when the startup exception occurs on the SoC subsequently, a cause of the exception cannot be effectively identified.

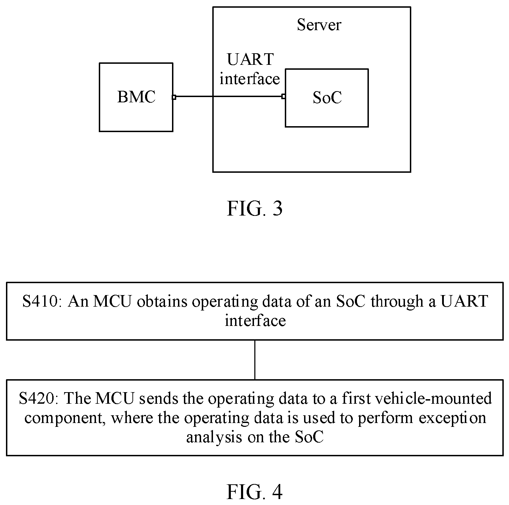

In the field of information and communications technology (information and communications technology, ICT) servers, as shown in FIG. 3, a baseboard management controller (baseboard management controller, BMC) may be externally connected to a UART interface of an SoC of a server, to export operating data of the SoC through the UART interface. However, in the vehicle field, externally connecting a BMC to an SoC in each controller in a vehicle not only increases hardware costs and software adaptation costs, but also brings an information security problem.

Therefore, to resolve the foregoing problems, an embodiment of this application provides a data obtaining method. An MCU with functional safety of a vehicle is used to replace a BMC in the ICT field, and a UART hardware channel from an SoC to the MCU is added, so that the MCU can obtain operating data of the SoC through the UART hardware channel, and the MCU sends the obtained operating data of the SoC, to analyze and process a running exception of the SoC. In this way, no additional hardware cost is required. After mass production of the controller including the MCU and the SoC, if a startup exception occurs on the SoC, related personnel may also obtain the operating data of the SoC through a path, to quickly analyze a cause of the startup exception of the SoC.

The following describes a data obtaining method provided in an embodiment of this application by using the controller in FIG. 1 as an example. The controller includes an MCU and an SoC. As shown in FIG. 4, the data obtaining method may include the following steps.

S410: The MCU obtains operating data of the SoC through a UART interface.

It may be understood that because the MCU is connected to the SoC through the UART interface, the MCU may directly obtain the operating data of the SoC through the UART channel.

The operating data of the SoC may be a series of startup data after the SoC is powered on, and the series of startup data may be used to subsequently perform startup exception analysis on the SoC. For example, the operating data of the SoC may include a series of code data, instructions, and the like that are executed when a BIOS is started, or may include a series of code data and the like that are executed when a Bootloader is started, or may include a series of code data and the like that are executed when an OS is started.

In some embodiments, the operating data of the SoC may alternatively be execution data used to implement various functions after the SoC is started. The series of execution data may be used to facilitate subsequent exception analysis on a running function of the SoC.

S420: The MCU sends the operating data to a first vehicle-mounted component, where the operating data is used to perform exception analysis on the SoC.

In this embodiment of this application, after obtaining the operating data of the SoC, the MCU may send the operating data of the SoC, so that related personnel can obtain the operating data of the SoC and parse the operating data by using a matched parsing script, to analyze and locate a cause of the exception of the SoC.

In this embodiment of this application, the MCU may send the operating data of the SoC to the first vehicle-mounted component in the vehicle through an in-vehicle bus. The first vehicle-mounted component may be any component, device, or the like in the vehicle.

In a manner, the first vehicle-mounted component may be a vehicle-mounted communication component having a communication function, for example, a vehicle-mounted gateway or a vehicle-mounted T-box. After the MCU sends the operating data of the SoC to the vehicle-mounted communication component, the vehicle-mounted communication component can send the operating data of the SoC to an external device of the vehicle, for example, a server in a vehicle-cloud system or a diagnostic device having a data monitoring and analysis capability. In this way, related personnel can view the operating data and analyze the cause of the exception.

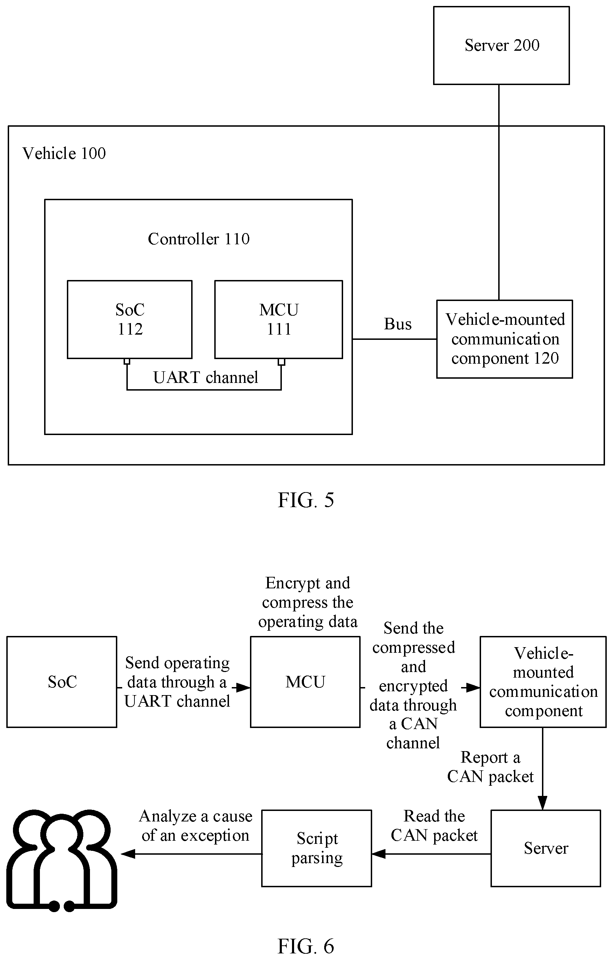

As shown in FIG. 5, after obtaining the operating data of the SoC 112 through the UART channel, the MCU 111 may forward the operating data of the SoC to the vehicle-mounted communication component through the bus in the vehicle, and the vehicle-mounted communication component reports the operating data to a server 200 in the vehicle-cloud system. In this way, related personnel can read the operating data from the server, to perform exception analysis on the SoC.

Optionally, the vehicle-mounted communication component may also have a data monitoring and analysis capability. Therefore, after receiving the operating data of the SoC, the vehicle-mounted communication component may also analyze and process the operating data, to obtain an analysis result, and then send the analysis result to the external device of the vehicle.

In another manner, the first vehicle-mounted component may be a vehicle-mounted display component having a display function, for example, a head unit. After the MCU sends the operating data of the SoC to the vehicle-mounted display component, the vehicle-mounted display component may analyze and process the operating data, to obtain an analysis result, and display the analysis result. In this way, related personnel can directly view the cause of the exception via the component.

In some embodiments, because memory space of the MCU is limited, the MCU may not be capable of bearing a large amount of operating data of the SoC. Therefore, after obtaining the operating data of the SoC, the MCU may also compress the operating data, to obtain compressed operating data, and then forward the compressed operating data to the first vehicle-mounted component. In this way, the MCU can store a large amount of operating data of the SoC with less memory space. A compression algorithm may be any compression algorithm in a related technology. This is not limited in this embodiment of this application. For example, an LZ77 compression algorithm is used.

In some embodiments, broadcasting the operating data of the SoC over the CAN network may pose risks of information leakage and system compromise. Therefore, after obtaining the operating data of the SoC, the MCU may also encrypt the operating data, to obtain encrypted operating data, and then forward the encrypted operating data to the first vehicle-mounted component. In this way, information security of the operating data of the SoC is ensured, and even if an attacker obtains the operating data of the SoC, the attacker cannot discern content of the operating data. The encryption algorithm may be any encryption algorithm known in a related technology. This is not limited in this embodiment of this application.

In some embodiments, after obtaining the operating data of the SoC, the MCU may first compress the operating data of the SoC to obtain compressed operating data, and then encrypt the compressed operating data to obtain encrypted operating data.

In some embodiments, after obtaining the operating data of the SoC, the MCU may first encrypt the operating data of the SoC to obtain encrypted operating data, and then compress the encrypted operating data to obtain compressed operating data. A sequence of encryption and compression is not limited in this embodiment of this application.

According to the data obtaining method provided in this embodiment of this application, for the vehicle controller including the MCU and the SoC, a UART hardware channel from the SoC to the MCU is added, so that the MCU can obtain the operating data of the SoC through the UART hardware channel, and the MCU sends the obtained operating data of the SoC to the first vehicle-mounted component, to analyze and process the operating data. In this way, even after mass production of the controller including the MCU and the SoC, if a startup exception occurs on the SoC, related personnel may still obtain the operating data of the SoC through a path, to quickly analyze a cause of the startup exception of the SoC.

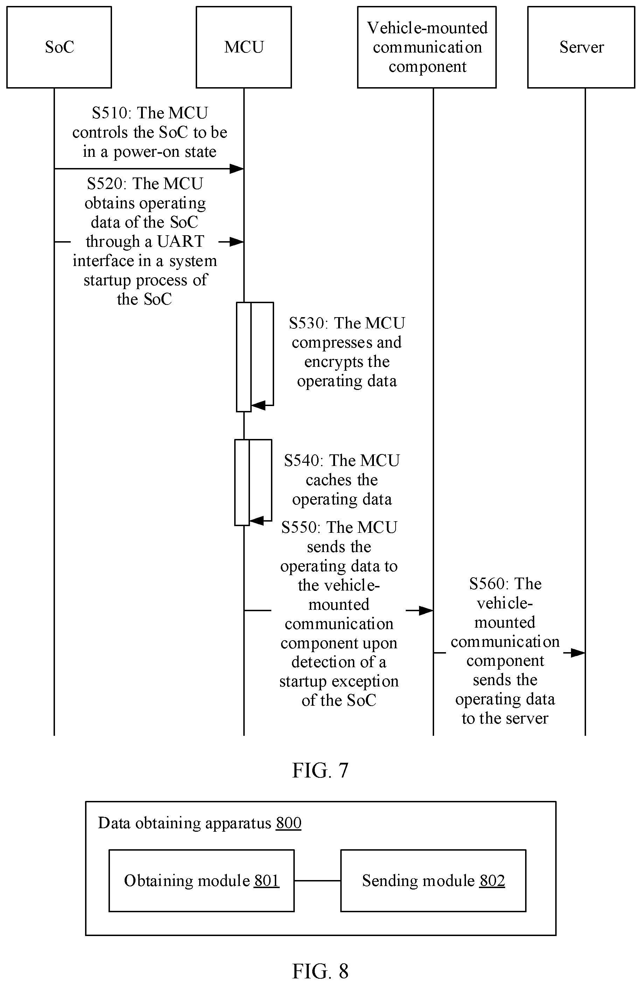

Refer to FIG. 6 and FIG. 7. FIG. 6 is a sequence diagram of a data obtaining method according to an embodiment of this application. FIG. 7 is a flowchart of a data obtaining method according to an embodiment of this application. The data obtaining method may include the following steps.

S510: An MCU controls an SoC to be in a power-on state.

In this embodiment of this application, when the SoC is in a power-off state, if the SoC needs to be started, the MCU may power on the SoC, so that the SoC is in the power-on state. After the SoC is in the power-on state, the SoC may sequentially start various systems on the SoC. In addition, in a startup process, startup data of the SoC may be forwarded to the MCU through a UART interface.

S520: The MCU obtains operating data of the SoC through the UART interface in a system startup process of the SoC.

In this embodiment of this application, after the MCU powers on the SoC, the MCU may obtain the operating data of the SoC through the UART interface.

S530: The MCU compresses and encrypts the operating data.

In this embodiment of this application, after obtaining the operating data of the SoC, the MCU may compress and encrypt the operating data of the SoC, to ensure data security and save memory space of the MCU.

S540: The MCU caches the operating data.

In this embodiment of this application, after compressing and encrypting the operating data, the MCU may temporarily store compressed and encrypted operating data, and wait to determine whether to send the compressed and encrypted operating data.

S550: The MCU sends the operating data to the vehicle-mounted communication component upon detection of a startup exception of the SoC.

In this embodiment of this application, after the MCU powers on the SoC, the SoC periodically transmits a data packet of a frame of heartbeat signal to the MCU, and the MCU performs timing processing on the heartbeat signal. If the MCU does not receive the heartbeat signal within a specified time, for example, one minute, the MCU considers that the startup exception occurs on the SoC. In this case, the MCU may send the compressed and encrypted operating data to the vehicle-mounted communication component.

Optionally, when the MCU sends the operating data of the SoC through the CAN bus, because the CAN bus has limited bandwidth and all the operating data cannot be sent at one time, the operating data may be segmented and then sent a plurality of times. The MCU segments the operating data of the SoC into a plurality of data slices, generates a CAN packet corresponding to each of the plurality of data slices, and cyclically sends, to the vehicle-mounted communication component through the CAN bus, the CAN packet corresponding to each data slice.

Optionally, the MCU may also send the operating data to the vehicle-mounted display component upon detection of the startup exception of the SoC. In this way, the vehicle-mounted display device may analyze and process the operating data, and display an analysis result.

In some embodiments, the MCU may alternatively send the operating data to the vehicle-mounted communication component or the vehicle-mounted display component in response to a first instruction of a user. In this way, after the MCU obtains the operating data of the SoC, if the MCU detects an enabling instruction of the user, the MCU may also send the operating data to the first vehicle-mounted component, so that the user learns of the cause of the startup exception of the SoC.

Optionally, upon detection of the startup exception of the SoC, the MCU may indicate the vehicle-mounted display component to display an exception prompt and display an exception analysis option (for example, an icon or a drop-down menu). After the user selects the exception analysis option, the MCU may send the temporarily stored operating data of the SoC to the vehicle-mounted display component in response to a tap operation, and the vehicle-mounted display component analyzes and processes the operating data and displays an analysis result.

S560: The vehicle-mounted communication component sends the operating data to a server.

In this embodiment of this application, after receiving the CAN packet, the vehicle-mounted communication component may report the CAN packet to the server, so that related personnel may obtain the CAN packet from the server, and parse the CAN packet by using a matched parsing script tool, to obtain the original operating data of the SoC before encryption and compression. Further, related personnel may analyze the startup exception of the SoC based on the parsed original operating data of the SoC.

It may be understood that to implement the foregoing functions, the controller or the MCU includes corresponding hardware structures and/or software modules for performing the functions. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

It should be noted that in embodiments of the present invention, module division is illustrative, and is merely a logical function division. During actual implementation, another division manner may be used. For example, the controller or the MCU may include a memory, a processor, a communication interface, and a bus. The memory, the processor, and the communication interface implement mutual communication connections through the bus.

An embodiment of this application further provides a data obtaining apparatus. The apparatus may be used in the foregoing controller or MCU. The apparatus is configured to perform functions or steps performed by the controller or the MCU in the foregoing method embodiments.

In embodiments of this application, the foregoing data obtaining apparatus may be divided into functional modules based on the foregoing method examples. For example, functional modules may be obtained through division based on corresponding functions, or at least two functions may be integrated into one processing module. The integrated module may be implemented in a form of hardware, or may be implemented in a form of a software functional module.

In an example, FIG. 8 is a diagram of a structure of a data obtaining apparatus according to an embodiment of this application. As shown in FIG. 8, the data obtaining apparatus 800 includes an obtaining module 801 and a sending module 802. The obtaining module 801 is configured to obtain operating data of an SoC through a UART interface. The sending module 802 is configured to send the operating data to a first vehicle-mounted component, where the operating data is used to perform exception analysis on the SoC.

In a possible implementation, the data obtaining apparatus 800 further includes a compression processing module, configured to compress the operating data, to obtain compressed operating data. The sending module 802 is configured to send the compressed operating data to the first vehicle-mounted component.

In a possible implementation, the data obtaining apparatus 800 further includes an encryption processing module, configured to encrypt the operating data, to obtain encrypted operating data. The sending module 802 is configured to send the encrypted operating data to the first vehicle-mounted component.

In a possible implementation, the obtaining module 801 is configured to: control the SoC to be in a power-on state; obtain the operating data of the SoC through the UART interface in a system startup process of the SoC; and cache the operating data.

In a possible implementation, the sending module 802 is configured to send the operating data to the first vehicle-mounted component upon detection of a startup exception of the SoC.

In a possible implementation, the sending module 802 is configured to send the operating data to the first vehicle-mounted component in response to a first instruction of a user.

In a possible implementation, the MCU is connected to the first vehicle-mounted component through a controller area network CAN bus, and the sending module 802 is configured to: segment the operating data into a plurality of data slices; generate a CAN packet corresponding to each of the plurality of data slices; and send, to the first vehicle-mounted component through the CAN bus, the CAN packet corresponding to each data slice.

In a possible implementation, the first vehicle-mounted component is a vehicle-mounted communication component, and the vehicle-mounted communication component is configured to establish a communication connection with an external device of the vehicle; and the operating data indicates the vehicle-mounted communication component to send the operating data to the external device, and indicates the external device to analyze and process the operating data.

In a possible implementation, the first vehicle-mounted component is a vehicle-mounted display device; and the operating data indicates the vehicle-mounted display device to analyze and process the operating data and display an analysis result.

It should be noted that content like information exchange and an execution process between the modules in the data obtaining apparatus 800 provided in FIG. 8 is based on a same concept as the method embodiment corresponding to FIG. 4 in this application. For specific content, refer to the descriptions in the foregoing method embodiment in this application. Details are not described herein again.

An embodiment of this application further provides a microcontroller unit MCU. The MCU is used in a vehicle, and the MCU includes a processor, a memory, and a universal asynchronous receiver/transmitter UART interface. The UART interface, the memory, and the processor are coupled. The UART interface is configured to connect to a system on a chip SoC, the memory is configured to store a computer program or instructions, and the processor is configured to run the computer program or the instructions, to perform functions or steps performed by the MCU in the foregoing method embodiments.

An embodiment of this application further provides a controller. The controller includes the foregoing data obtaining apparatus, or includes the foregoing MCU. Optionally, the controller is a domain controller or an electronic control unit ECU.

An embodiment of this application further provides a chip system. The chip system includes at least one processor and at least one interface circuit. The processor and the interface circuit may be interconnected through a line. The interface circuit may read instructions stored in a memory, and send the instructions to the processor. When the instructions are executed by the processor, the chip system is enabled to perform the functions or steps performed by the MCU in the foregoing method embodiments. Certainly, the chip system may further include another discrete component. This is not specifically limited in this embodiment of this application.

An embodiment of this application further provides a computer program product. When the computer program product runs on an MCU, the MCU is enabled to perform the functions or steps performed by the MCU in the foregoing method embodiments.

Based on the foregoing descriptions of the implementations, a person skilled in the art may clearly understand that for the purpose of convenient and brief descriptions, division into the foregoing functional modules is merely used as an example for description. During actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A data obtaining method, applied to a microcontroller unit MCU in a controller of a vehicle, wherein the controller further comprises a system on a chip SoC, the MCU is connected to the SoC through a universal asynchronous receiver/transmitter UART interface, and the method comprises:
obtaining operating data of the SoC through the UART interface; and
sending the operating data to a first vehicle-mounted component, wherein the operating data is used to perform exception analysis on the SoC.

2. The method according to claim 1, wherein after obtaining the operating data of the SoC through the UART interface, the method further comprises:
compressing the operating data to obtain compressed operating data; and
sending the operating data to the first vehicle-mounted component comprises:
sending the compressed operating data to the first vehicle-mounted component.

3. The method according to claim 1 or 2, wherein after obtaining the operating data of the SoC through the UART interface, the method further comprises:
encrypting the operating data to obtain encrypted operating data; and
sending the operating data to the first vehicle-mounted component comprises:
sending the encrypted operating data to the first vehicle-mounted component.

4. The method according to any one of claims 1 to 3, wherein obtaining the operating data of the SoC through the UART interface comprises:
controlling the SoC to be in a power-on state;
obtaining the operating data of the SoC through the UART interface in a system startup process of the SoC; and
caching the operating data.

5. The method according to any one of claims 1 to 4, wherein sending the operating data to the first vehicle-mounted component comprises:
sending the operating data to the first vehicle-mounted component upon detection of a startup exception of the SoC.

6. The method according to any one of claims 1 to 4, wherein sending the operating data to the first vehicle-mounted component comprises:
sending the operating data to the first vehicle-mounted component in response to a first instruction of a user.

7. The method according to any one of claims 1 to 6, wherein the MCU is connected to the first vehicle-mounted component through a controller area network CAN bus, and sending the operating data to the first vehicle-mounted component comprises:
segmenting the operating data into a plurality of data slices;
generating a CAN packet corresponding to each of the plurality of data slices; and
sending, to the first vehicle-mounted component through the CAN bus, the CAN packet corresponding to each data slice.

8. The method according to any one of claims 1 to 7, wherein the first vehicle-mounted component is a vehicle-mounted communication component, and the vehicle-mounted communication component is configured to establish a communication connection with an external device of the vehicle; and
the operating data indicates the vehicle-mounted communication component to send the operating data to the external device, and indicates the external device to analyze and process the operating data.

9. The method according to any one of claims 1 to 7, wherein the first vehicle-mounted component is a vehicle-mounted display device; and
the operating data indicates the vehicle-mounted display device to analyze and process the operating data and display an analysis result.

10. A microcontroller unit MCU, used in a vehicle, wherein the MCU comprises a processor, a memory, and a universal asynchronous receiver/transmitter UART interface, the UART interface, the memory, and the processor are coupled, the UART interface is configured to connect to a system on a chip SoC, the memory is configured to store a computer program or instructions, and the processor is configured to run the computer program or the instructions, to perform the method according to any one of claims 1 to 9.

11. A controller, wherein the controller comprises the MCU and the SoC according to claim 10.

12. A vehicle, wherein the vehicle comprises the controller according to claim 11.

13. A chip, wherein the chip comprises an interface circuit and a processor, the interface circuit and the processor are interconnected through a line, the interface circuit is configured to receive a signal, the signal comprises instructions, and the processor is configured to run the instructions to perform the method according to any one of claims 1 to 9.
